# FASCICULE DE BREVET EUROPEEN

(11) **EP 2 444 614 B1**
(45) Date de publication et mention de la délivrance du brevet: **14.08.2013**
(21) Numéro de dépôt: 10013919.5
(22) Date de dépôt: 25.10.2010
(51) Int. Cl.: F01N 5/02, F01N 3/20, F01N 3/02, F01N 3/08

(54) **Système destiné à réduire la quantité de nox dans les gaz d'échappement d'un véhicule à moteur**
System zur Verringerung der Stickoxidmenge in den Abgasen eines Kraftfahrzeugs
System intended for reducing the amount of NOx in the exhaust gaz of a motor vehicle

(43) Date de publication de la demande: 25.04.2012
(73) Titulaire: Aaqius & Aaqius S.A., 1207 Genève (CH)
(72) Inventeur: Dementhon, Jean-Baptiste, 75011 Paris (FR); Audouin, Arnaud, 75018 Paris (FR)
(74) Mandataire: Regimbeau

(56) Documents cités:
- EP-A1- 0 596 854
- WO-A1-2007/000170
- US-A1- 2003 101 714

## Description

L'invention proposée concerne un système à catalyseur SCR (Selective Catalytic Reduction) destiné à réduire la quantité de NOx dans les gaz d'échappement d'un véhicule à moteur.

Les émissions de polluants liées au transport sont depuis près de trente ans un moteur de progrès de premier plan de l'industrie. La séverisation progressive des limites en émission pour les quatre polluants réglementés (CO, HC, NOx, particules) a permis d'améliorer significativement la qualité de l'air notamment dans les grandes agglomérations.

L'utilisation toujours croissante de l'automobile nécessite de poursuivre les efforts pour réduire encore davantage ces émissions de polluants. Ainsi, la réduction des oxydes d'azote (NOx), reste une problématique complexe dans le contexte de la sévérisation des seuils émission Européen attendu en 2015 pour l'entrée en vigueur de la norme €6. Disposer de technologies de dépollution à forte efficacité dans toutes les conditions de roulage reste un enjeu majeur pour l'industrie du transport.

Dans un deuxième temps, la consommation de carburant, en lien direct avec les émissions de CO2, a été propulsée en quelques années préoccupation majeure de l'automobile. Ainsi, une réglementation sera mise en place au niveau Européen à partir de 2012 sur les émissions de CO2 des véhicules particuliers. Il est d'ores et déjà acquis que cette limite sera régulièrement abaissée au cours des décennies à venir. Le CO2 s'est donc imposé comme le nouveau moteur de croissance pour toute l'industrie des transports.

Cette double problématique réduction de la pollution locale (NOx) et réduction de la consommation carburant (CO2) est particulièrement difficile pour le moteur Diesel dont la combustion en mélange pauvre s'accompagne d'émission NOx difficile à traiter.

C'est dans ce contexte que la technologie de post-traitement SCR est envisagée à la fois pour les véhicules affectés au transport de marchandises et les véhicules particuliers. Il a en effet été démontré que la forte efficacité de réduction NOx permet de positionner le moteur sur son fonctionnement optimal en rendement, les fortes émissions de NOx étant ensuite traitées à l'échappement par le système SCR.

Une contrainte de la technologie SCR est la nécessité d'embarquer à bord du véhicule un agent réducteur nécessaire pour la réduction des oxydes d'azote. Le système actuellement retenu par les poids lourds utilise l'urée en solution aqueuse comme agent réducteur. Injecté à l'échappement, l'urée se décompose par effet de la température des gaz d'échappement en ammoniac (NH3) et permet la réduction des NOx sur un catalyseur spécifique.

L'intégration d'un réservoir d'urée en solution aqueuse reste une contrainte forte du système SCR. Une solution alternative à l'étude est le stockage d'ammoniac gazeux dans des sels. Dans ce cas, l'ammoniac est stocké sous forme de complexe chimique dans une matrice poreuse constituée notamment de sels de type chlorure (MgCl2, SrCl2, CaCl2, BaCl2, ZnCl2, etc...). L'ammoniac est désorbé en modifiant la température et/ou la pression de la matrice, puis est injecté à l'échappement pour traitement des NOx.

Le document WO 2007/000170 A1 présente un exemple d'un tel système SCR, permettant le stockage et la libération d'ammoniac pour réduire des NOx dans des gaz d'échappement.

Les réactions chimiques en jeu dans le post-traitement des émissions issues de la combustion au sein d'un moteur thermique sont des réactions catalytiques qui dépendent au premier plan de la température des gaz d'échappement et de l'imprégnation catalytique.

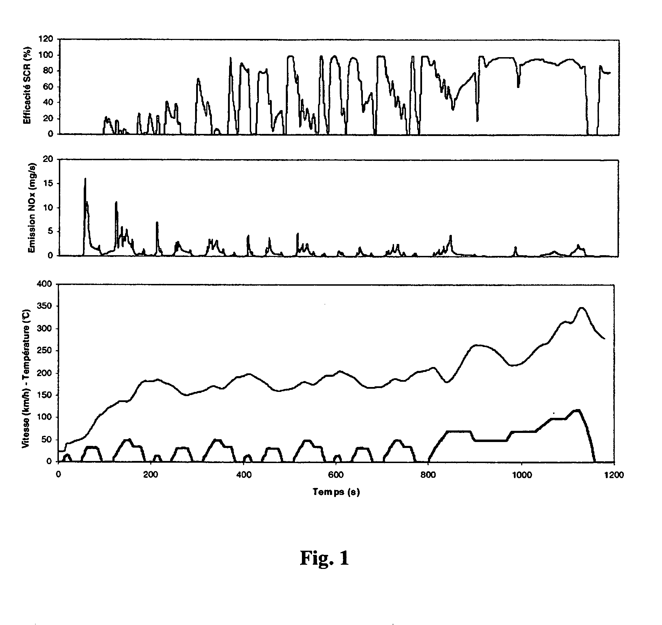

Or, au démarrage du véhicule, la température des gaz d'échappement est insuffisante pour assurer une conversion catalytique significative. Il faut donc attendre un certain lapse de temps pour que les gaz d'échappement atteignent une température à laquelle la réduction des NOx par SCR soit efficace. La figure 1 représente une évolution typique de température échappement sur un cycle homologation Europe (New European Driving Cycle: NEDC). Les émissions de NOx obtenues après post-traitement par le catalyseur SCR ainsi que l'efficacité de ce post-traitement sont aussi indiquées. Ainsi lorsque le véhicule démarre, la température à l'échappement est insuffisante pour assurer une conversion catalytique significative, les émissions issues du moteur ne sont donc pas post-traité, l'efficacité est proche de zéro. La température augmente progressivement au cours du cycle et permet alors « l'allumage » du système de post-traitement, la conversion catalytique est possible avec une efficacité pouvant approcher 100%.

Le but de la présente invention est donc de proposer un système destiné à réduire la quantité de NOx dans les gaz d'échappement d'un véhicule à moteur et agencé pour accélérer la montée en température des gaz d'échappement lors du démarrage du véhicule à moteur afin de raccourcir le temps nécessaire pour que la conversion catalytique soit optimale.

Conformément à l'invention, ce but est atteint grace à un système à catalyseur SCR destiné à réduire la quantité de NOx dans les gaz d'échappement d'un véhicule à moteur, le système comportant: une enceinte de stockage contenant un agent réducteur; un catalyseur SCR pour traiter les gaz d'échappement chargés en agent réducteur, et un module d'injection agencé pour injecter l'agent réducteur provenant de l'enceinte de stockage dans les gaz d'échappement du véhicule à moteur, en amont du catalyseur SCR. Le système selon l'invention comporte en outre: au moins un échangeur de chaleur connecté à l'enceinte de stockage et contenant une matrice poreuse destinée à absorber l'agent réducteur provenant de l'enceinte de stockage; une vanne ou un injecteur en aval de l'enceinte de stockage et en amont de l'échangeur et agencé pour contrôler l'apport en agent réducteur à l'intérieur de l'échangeur, et une soupape disposée entre l'enceinte de stockage et l'échangeur. L'échangeur est agencé pour transférer de l'énergie thermique aux gaz d'échappement du véhicule à moteur en amont du catalyseur SCR au cours d'une première période dite de démarrage suivant le démarrage dudit véhicule. La vanne ou l'injecteur est agencé pour contrôler le débit de l'agent réducteur à l'intérieur de l'échangeur durant ladite période de démarrage afin que l'absorption de l'agent réducteur par la matrice poreuse de l'échangeur élève la température de ce dernier. La vanne ou l'injecteur est en outre agencé pour ensuite être fermé au cours d'une période dite à température de fonctionnement lors du fonctionnement du véhicule à moteur dès que les gaz d'échappement ont atteint une certaine température. La soupape est quant à elle agencée pour d'une part, réguler la pression à l'intérieur de l'échangeur durant ladite période à température de fonctionnement et pour d'autre part, convoyer l'agent réducteur contenu dans l'échangeur dans l'enceinte de stockage lorsque la pression à l'Intérieur de l'échangeur est supérieure à la pression à l'intérieur de l'enceinte de stockage.

Dans une forme d'exécution préférentielle de l'invention, l'enceinte de stockage contient un premier sel alors que l'échangeur contient un second sel. Les sels sont des chlorures métalliques choisis de manière à ce que l'enthalpie de désorption en ammoniac du premier sel agencé à l'intérieur de l'enceinte de stockage soit inférieure à l'enthalpie de désorption en ammoniac du second sel agencé à l'intérieur de l'échangeur.

Dans une autre forme d'exécution selon l'invention, l'enceinte de stockage comporte de l'ammoniac sous pression comme agent réducteur en lieu et place du premier sel.

L'invention porte également sur un procédé de mise en oeuvre du système à catalyseur SCR comportant les étapes suivantes:
- ouverture de la vanne lors du démarrage du véhicule à moteur afin que l'agent réducteur contenu dans l'enceinte de stockage soit convoyé sous forme gazeuse dans l'échangeur sous l'effet de la différence de pression existant à l'intérieur respectivement de l'enceinte de stockage et de l'échangeur;
- fermeture de la vanne lorsque la température des gaz ont atteint une valeur prédéterminée;
- purge progressive de l'échangeur au cours de la période de fonctionnement du véhicule à moteur, en évacuant l'agent réducteur au travers de la soupape pour qu'il soit introduit à nouveau dans l'enceinte de stockage.

Les caractéristiques de l'invention apparaîtront plus clairement à la lecture de la description de plusieurs formes d'exécution, données uniquement à titre d'exemples, nullement limitatives en se référant aux figures schématiques, dans lesquelles:
- la Figure 1 illustre l'efficacité de la conversion catalytique, les émissions NOx et la température des gaz d'échappement selon un cycle d'homologation NEDC (New European Driving Cycle) pour un système de dépollution conventionnel;
- la Figure 2 illustre un système à catalyseur SCR destiné à réduire la quantité de NOx dans les gaz d'échappement selon une première forme d'exécution de l'invention,
- la Figure 3 illustre un système à catalyseur SCR destiné à réduire la quantité de NOx dans les gaz d'échappement selon une deuxième forme d'exécution de l'invention;
- La Figure 4 représente une partie plus détaillée du système selon la première et la deuxième forme d'exécution de l'invention;
- La Figure 5 représente le principe de fonctionnement du système selon l'équation de Glapeyron;
- La Figure 6 représente le fonctionnement de l'échangeur thermique dans la ligne d'échappement selon le cycle d'homologation NEDC.
- La Figure 7 illustre une vue schématique d'un élément de dépollution avec l'échangeur agencé selon une première variante;
- La Figure 8 illustre une vue schématique de l'élément de dépollution avec l'échangeur agencé selon une seconde variante;
- La Figure 9 illustre une vue schématique d'un conduit de recirculation des gaz autour duquel est agencé l'échangeur.

### Description détaillée de l'invention

Dans le système proposé, le stockage de l'agent réducteur repose sur une réaction réversible solide - gaz du type : 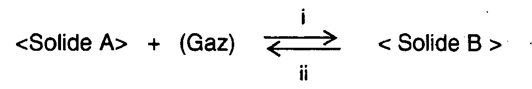 dans laquelle le gaz est l'ammoniac et le solide un sel anhydre de type chlorure métallique : MgCl2, SrCl2, CaCl2, BaCl2, ZnCl2, etc...

Les réactions d'absorption (i) et de désorption (ii) sont entièrement réversibles. La pression d'équilibre en ammoniac du système peut être déterminée pour une température donnée par la relation Clausius-Capeyron qui est donnée par la formule suivante : 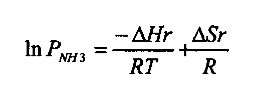 où ΔHr est l'enthalpie de désorption par mole de NH3, ΔSr est l'entropie de désorption par mole de NH3 et R la constante des gaz parfait.

Selon cette formule, la pression d'équilibre en ammoniac de ces sels dépend de la température.

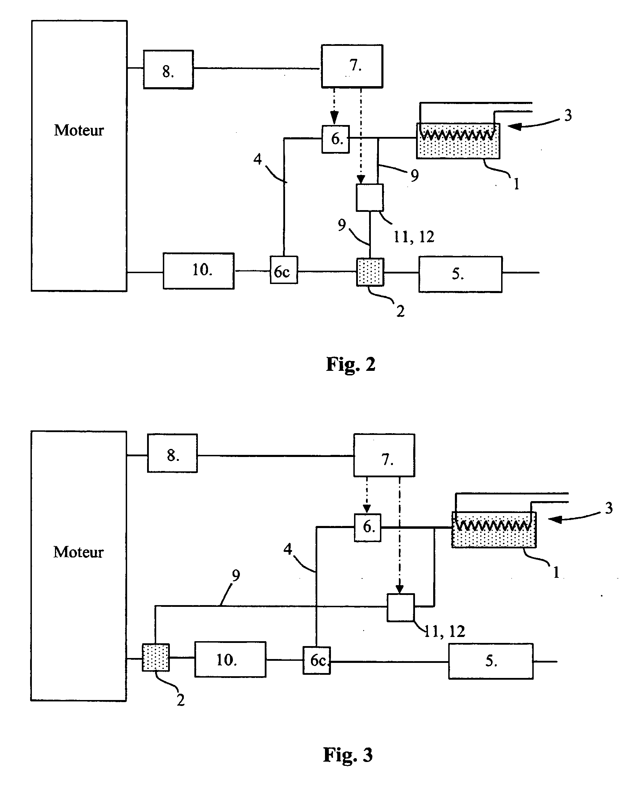

Selon la première forme d'exécution de l'invention telle qu'illustrée par la Figure 2, le système comporte deux matériaux composites agencés respectivement à l'intérieur de l'enceinte de stockage 1 et à l'intérieur de l'échangeur 2. Chaque matériau composite comporte un ou plusieurs sels comprimés et, de préférence, du graphite expansé, lequel est utilisé comme liant de manière à obtenir une matrice poreuse destinée à recevoir de l'ammoniac. Le sel du matériau composite agencé à l'intérieur de l'enceinte de stockage 1 (dénommé ci-après Sel A) et le sel du matériau composite agencé dans l'échangeur 2 (dénommé ci-après Sel B) sont choisis afin que l'enthalpie de désorption en ammoniac du Sel A soit inférieure à l'enthalpie de désorption en ammoniac du Sel B. Le sel A est de préférence du chlorure de baryum (BaCl2) ou du chlorure de strontium (SrCl2) tandis que le sel B est de préférence du chlorure de manganèse (MnCl2), du chlorure de fer (FeCl2) ou du chlorure de magnésium (MgCl2).

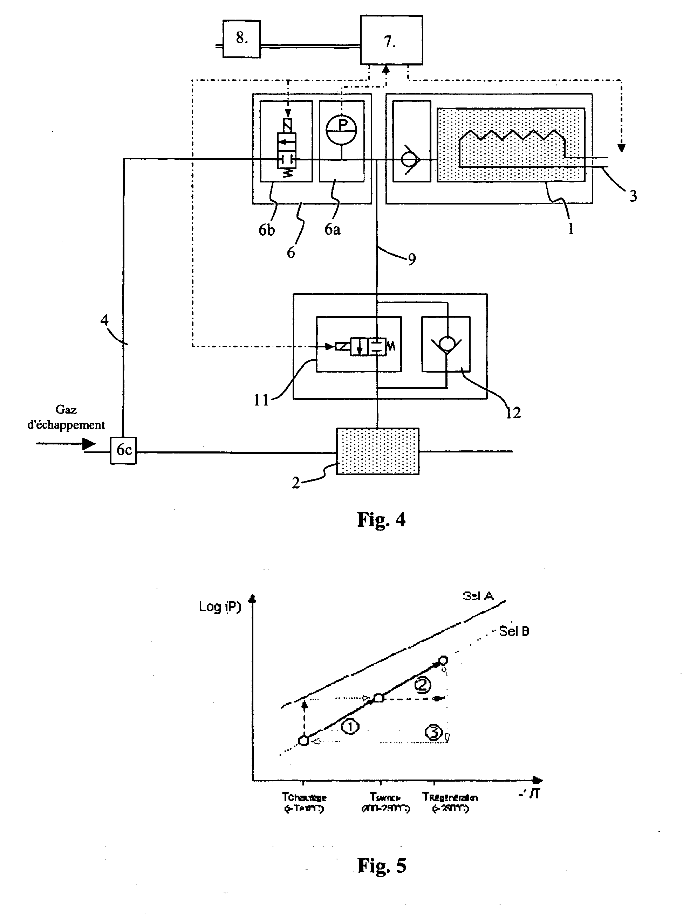

En référence avec la Figure 2, l'enceinte de stockage 1, contenant le Sel A destiné à absorber et désorber l'ammoniac, est agencée pour être pilotée en température par un corps de chauffe 3 afin de désorber l'ammoniac du Sel A et de le convoyer au travers d'un premier conduit 4 pour pouvoir l'injecter dans les gaz d'échappement en amont d'un catalyseur SCR 5. Pour limiter la consommation d'énergie du corps de chauffe 3, la pression à l'intérieur de l'enceinte 1 doit être limitée à une valeur basse tout en étant suffisamment élevée pour permettre un débit d'ammoniac suffisant et compatible avec les émissions de NOx du moteur thermique. A cet effet, l'enceinte de stockage 1 est reliée à un module d'alimentation 6, lequel est piloté par un calculateur dédié 7 relié au calculateur moteur 8. Selon la Figure 4, ce module d'alimentation 6 comporte un dispositif 6a de mesure de la pression ou de la température à l'intérieur de l'enceinte de stockage 1 ainsi qu'un dispositif de dosage 6b de l'ammoniac. La pression ou la température mesurée par le dispositif 6a de mesure de pression ou de température à l'intérieur de l'enceinte 1 est comparée à une pression ou à une température de consigne, Celle-ci est déterminée de façon dynamique en fonction d'une analyse d'un certain nombre de paramètres moteur et véhicule, comme par exemple la concentration de NOx émis à chaque instant (grandeur pouvant être mesurée et/ou modélisée), la température du lubrifiant du moteur, la température du liquide de refroidissement du moteur, la température à l'échappement dans la veine gazeuse ou à l'intérieur des canaux de catalyseurs ou de filtres, la vitesse du véhicule, le régime moteur, la charge moteur ou une combinaison de ces paramètres.

Toujours selon la Figure 2, l'échangeur de chaleur 2, relié à l'enceinte de stockage 1 par un conduit 9, est agencé dans le flux des gaz d'échappement en aval d'un ou plusieurs éléments de dépollution additionnel 10 sous forme d'un catalyseur d'oxydation ou d'un catalyseur trois voies et, le cas échéant, d'un filtre à particule, l'échangeur de chaleur 2 étant en outre agencé en aval d'un module d'injection 6c de l'ammoniac et en amont du catalyseur SCR 5.

Selon la Figure 4, une vanne 11 est montée sur le conduit 9 en aval de l'enceinte de stockage 1 et en amont de l'échangeur 2, et est agencée pour être pilotée par le calculateur 7 de façon à contrôler l'apport en ammoniac dans ledit échangeur 2. Le système à catalyseur SCR selon l'invention comporte par ailleurs une soupape 12 disposée entre l'enceinte de stockage 1 et l'échangeur 2.

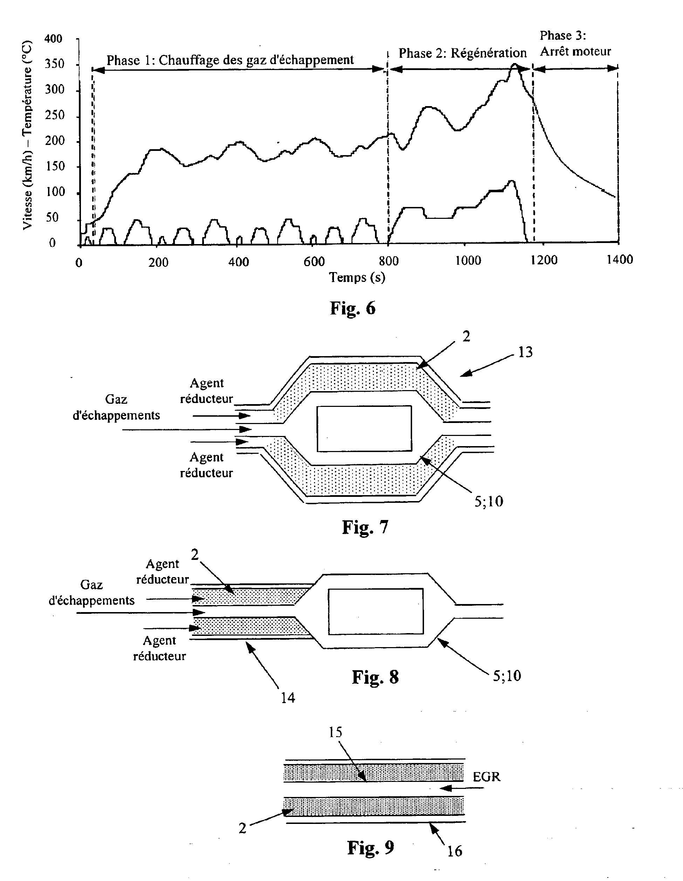

Le fonctionnement du système à catalyseur SCR selon invention peut être découpé en deux phases (Figure 6), à savoir une première phase de démarrage débutant au démarrage du véhicule à moteur et continuant jusqu'à ce que les gaz d'échappement ont atteint une température à laquelle la conversion catalytique est optimale (dénommée ci-après période de démarrage, suivi par une deuxième phase de fonctionnement du véhicule à moteur continuant jusqu'à l'arrêt du moteur (dénommée ci-après période de fonctionnement).

Au démarrage du véhicule à moteur, les gaz d'échappement sont relativement froids. Dans ces conditions, la température à l'intérieur de l'enceinte de stockage 1 est similaire à celle à l'intérieur de l'échangeur 2. Du fait de la nature différente des sels A et B, la pression à l'intérieur de l'enceinte de stockage 1 est supérieure à la pression à l'intérieur de l'échangeur 2. Au cours de la période de démarrage, la vanne 11 est ouverte pour que de l'ammoniac sous forme de gaz soit convoyé de l'enceinte 1 au travers du conduit 9 pour y être injecté à l'intérieur de l'échangeur 2 et absorbé par le Sel B. Cette absorption génère une augmentation de la température de l'échangeur 2 selon la relation de Clausius-Capeyron, permettant par conduction de chaleur de réchauffer les gaz d'échappement.

Dès que les gaz d'échappement ont atteint une température à laquelle la conversion catalytique est optimale, la vanne 11 se ferme. La température des gaz d'échappement sont alors aux environs de 250°C voir plus, lesquels élèvent la température de l'échangeur 2, ce qui augmente la pression à l'intérieur de celui-ci. La soupape 12 est agencée pour d'une part, réguler la pression à l'intérieur de l'échangeur 2 durant la période à température de fonctionnement et pour d'autre part, rediriger l'ammoniac de l'échangeur 2 dans l'enceinte de stockage 1. Ainsi, sous l'effet de la température des gaz d'échappement rejetés durant la période de fonctionnement du véhicule à moteur, l'échangeur 2 est progressivement « vidé » en ammoniac. Au cours de la période à température de fonctionnement du véhicule à moteur, le système selon l'invention fonctionne de façon totalement passive.

Dès l'arrêt du moteur, le système revient progressivement à la température extérieure. Dans ces conditions, la pression à l'intérieur de l'enceinte de stockage 1 est à nouveau supérieure à la pression à l'intérieur de l'échangeur 2. La vanne 11 est maintenue en position fermée afin de confiner le gaz ammoniac dans l'enceinte de stockage 1. Le système est régénéré, prêt à fonctionner lors du prochain démarrage du véhicule à moteur.

Dans une seconde forme d'exécution telle qu'illustrée par la Figure 3, le ou les éléments de dépollution additionnels 11 sont agencés en amont du module d'injection 6c de l'ammoniac, le catalyseur SCR 3 est quant à lui agencé en aval du module d'injection.

Dans une seconde application de la présente invention, le dispositif de dosage permet de contrôler le débit de gaz d'ammoniac circulant vers l'échangeur 2 en fonction de la pression mesurée notamment à l'intérieur de l'enceinte de stockage 1. Ce dispositif de type injecteur permet alors d'ajuster le profil de montée en pression à l'intérieur de l'échangeur 2 et ainsi la puissance calorifique transmise aux gaz d'échappement.

Selon une variante d'exécution, l'enceinte de stockage 1 contient de l'ammoniac sous pression, en lieu et place du Sel A alors que l'échangeur 2 contient quant à lui un sel de type chlorure métallique tel que du chlorure de baryum (BaCl2) ou du chlorure de strontium (SrCl2).

Dans la présente invention, le début et la fin de la phase de chauffage des gaz d'échappement ainsi que le profil d'ouverture du dispositif de dosage lors de cette phase, sont pilotés par un calculateur 7 en fonction d'un certain nombre de paramètres moteurs. La température de l'eau de refroidissement du moteur, la température d'huile, la température des gaz d'échappement et/ou une analyse des conditions de roulage passées et présentes pourront notamment être pris en compte. Par la calibration de cette stratégie de pilotage, il convient de s'assurer que la phase de régénération est suffisamment longue et à température suffisamment haute pour que le dispositif de chauffage soit entièrement régénéré avant l'arrêt moteur.

Le principe décrit ci-dessus prévoit un transfert intelligent d'ammoniaque entre l'enceinte de stockage 1, laquelle est destinée à alimenter d'une part, un système d'injection agencé dans la ligne d'échappement en amont du catalyseur SCR 5, et d'autre part, l'échangeur 2, permettant d'utiliser les propriétés de climatisation attachées à la chemisorption du NH3 dans un chlorure métallique permettant une régulation de la température d'échappement.

L'échangeur 2 selon l'invention est de préférence agencé au plus près de la ligne d'échappement. Selon la Figure 7, la matrice poreuse de l'échangeur 2 est disposée autour du catalyseur SCR 5 ou tout autre élément de dépollution 10, l'élément de dépollution 5, 10 ainsi que la matrice poreuse de l'échangeur 2 étant confinés à l'intérieur d'un réceptacle 13. Dans une autre configuration telle qu'illustrée par la Figure 8, un tube 14 est agencé coaxialement autour de la ligne d'échappement 14' en différents endroits, la matrice poreuse de l'échangeur 2 étant agencée dans l'espace entre la ligne d'échappement 1' et le tube 14.

La matrice poreuse de l'échangeur 2 peut être également agencé à l'intérieur du catalyseur 5 autour des différents pains catalytiques, cet arrangement présentant par surcroît l'avantage d'isoler thermiquement les portions d'échappement, y compris pendant les phases sans transfert d'ammoniaque, c'est-à-dire de confiner un maximum de calories à l'intérieur de l'échappement et de minimiser ainsi les déperditions d'énergie inutiles vers l'extérieur.

Il existe plusieurs architectures de lignes d'échappement potentiellement rencontrées sur les Diesel, notamment:
- une architecture comportant à la suite un circuit de recirculation des gaz d'échappement *(Exhaust Gas Recirculation* ci-après dénommé "conduit EGR") - une turbine - un catalyseur d'oxydation *(Diesel Oxidation Catalyst* ci-après dénommé "DOC") - un filtre à particule *(Diesel Particulate Filter* ci-après dénommé "DPF") - injection NH3 et un catalyseur SCR,
- une architecture comportant à la suite un conduit EGR - une turbine - un DOC - injection NH3, un catalyseur SCR - un DPF,
- une architecture comportant à la suite un conduit EGR - une turbine - un DOC - injection NH3 - un catalyseur SCR et un DPF sur un substrat unique.

Les trois architectures susvisées peuvent comprendre en outre un deuxième embranchement de conduit EGR LP dit basse pression (EGR LP "Low Pressure" par opposition à l'EGR HP "High Pressure" présent sur tous les Diesel), situé en aval du DPF.

L'échangeur 2 selon l'invention peut donc être agencé à différents endroits en fonction de l'architecture et du but recherché. Il pourrait par exemple être agencé en tout point en amont de la turbine pour accélérer la mise en action de cette dernière, en vue de limiter le «turbo lag» et augmenter ainsi le couple à bas régime du moteur. La circulation inverse (qui permet de "vider" l'échangeur 2), peut être mise à contribution pour extraire les calories de la ligne d'échappement lorsque la température excède la température maximale tolérée par la turbine.

L'échangeur 2, peut également être agencé en tout point en amont du catalyseur d'oxydation (DOC) pour accélérer l'amorçage de ce dernier, donc la production de N02, mécanisme chimique déterminant à l'amorçage du catalyseur SCR situé toujours en aval du DOC. Cette localisation pourra avoir également avoir un impact pour accélérer la mise en action du catalyseur en vue de régénérer le filtre à particules. La capacité de stockage doit se remplir durant la phase où l'on désire récupérer des calories.

L'échangeur 2 peut également être agencé en aval du filtre à particules, pour éviter les surchauffes liées à la régénération du filtre à particules et ainsi protéger des exothermes le catalyseur SCR 5 lorsqu'il est situé en aval du filtre. Dans ce cas, l'enceinte de stockage 1 doit être vidée lorsque l'on veut éviter une surchauffe.

L'échangeur peut aussi être agencé autour du substrat DPF lorsque l'imprégnation catalytique SCR se situe à même le filtre pour éviter les exothermes à l'intérieur du matériau filtrant.

Enfin, l'échangeur peut être agencé autour des conduits EGR (HP et BP), afin de favoriser le refroidissement des flux EGR, en vue d'en augmenter les débits. Dans ce cas, l'enceinte de stockage doit être vidée lorsque l'on désire refroidir l'EGR.

## Revendications

1. Système destiné à réduire la quantité de NOx dans les gaz d'échappement d'un véhicule à moteur, le système comportant
- une enceinte de stockage (1) contenant un agent réducteur
- un catalyseur SCR (5) pour traiter les gaz d'échappement chargés en agent réducteur, et
- un module d'injection (6c) agencé pour injecter l'agent réducteur provenant de l'enceinte de stockage (1) dans les gaz d'échappement du véhicule à moteur, en amont du catalyseur SCR (5),
**caractérisé en ce que**
ledit système comporte en outre:
- au moins un échangeur de chaleur (2) connecté à l'enceinte de stockage (1) et contenant une matrice poreuse destinée à absorber l'agent réducteur provenant de l'enceinte de stockage (1);
- une vanne ou une injecteur (11) en aval de l'enceinte de stockage (1) et en amont de l'échangeur (2) et agencé pour contrôler l'apport en agent réducteur à l'inténeur de l'échangeur (2), et
- une soupape (12) disposée entre l'enceinte de stockage (1) et l'échangeur (2):
et **en ce que**
- l'échangeur (2) est agencé pour transférer de l'énergie thermique aux gaz d'échappement du véhicule à moteur en amont du catalyseur SCR (5) au cours d'une première période dite de démarrage suivant le démarrage dudit véhicule,
- la vanne ou l'injecteur (11) est agencé pour contrôler le débit de l'agent réducteur à l'intérieur de l'échangeur (2) durant ladite période de démarrage afin que l'absorption de l'agent réducteur par la matrice poreuse de l'échangeur (2) élève la température de ce dernier,
- la vanne ou l'injecteur (11) est agencé pour ensuite être fermé au cours d'une période dite à température de fonctionnement lors du fonctionnement du véhicule à moteur dès que les gaz d'échappement ont atteint une certaine température; et
- la soupape (12) est agencée pour d'une part, réguler la pression à l'intérieur de l'échangeur (2) durant ladite pénode à température de fonctionnement et pour d'autre part, convoyer ragent réducteur contenu dans l'échangeur (2) dans l'enceinte de stockage (1) lorsque la pression à l'intérieur de l'échangeur (2) est supérieure à la pression à l'intérieur de l'enceinte de stockage (1).

2. Système selon la revendication 1, **caractérisé en ce que** la vanne ou l'injecteur (11) est agencé pour être fermé dès le début de la période à température de fonctionnement du véhicule à moteur jusqu'au début de la prochaine période de démarrage.

3. Système selon la revendication 1 ou 2, **caractérisé en ce qu'**il comporte en outre un corps de chauffe (3) agencé pour chauffer l'enceinte de stockage (1) en fonction de la valeur d'un ou plusieurs paramètres choisi(s) parmi la concentration de NOx émis, la température du lubrifiant du moteur, la température du liquide de refroidissement du moteur, la vitesse du véhicule, le régime moteur et la charge moteur.

4. Système selon la revendication 1, 2 ou 3, **caractérisé en ce que** l'agent réducteur est de l'ammoniac.

5. Système selon la revendication 4, **caractérisé en ce que** l'enceinte de stockage (1) contient de l'ammoniac sous pression et **en ce que** la matrice poreuse de l'échangeur (2) est un sel choisi parmi les chlorures métalliques telles que le chlorure de baryum, le chlorure de strontium, le chlorure de magnésium, le chlorure de calcium et le chiorure de nickel.

6. Système selon la revendication 4, **caractérisé en ce que** l'enceinte de stockage (1) et l'échangeur (2) contiennent respectivement un premier et un second sel, les sels étant des chlorures métalliques choisis de manière à ce que l'enthalpie de désorption en ammoniac du premier sel soit inférieure à l'enthalpie de désorption en ammoniac du second sel.

7. Système selon l'une quelconque des revendications précédentes, **caractérisé en ce que** l'échangeur (2) est agencé dans les gaz d'échappement en aval d'un module d'injection (6c) de l'agent réducteur et en amont du catalyseur SCR (5).

8. Système selon l'une quelconque des revendications 1 à 6, **caractérisé en ce qu'**il comporte en outre un ou plusieurs éléments de dépollution additionnels (10) choisis parmi un catalyseur d'oxydation, un catalyseur trois voies et un filtre à particule, le ou les éléments de dépollution (10) étant agencés en amont du module d'injection (6c) de l'agent réducteur alors que la catalyseur SCR (5) est agencé en aval de dudit module d'injection (6c), et **en ce que** l'échangeur (2) est agencé en amont du ou desdits éléments de dépollution additionnels (10),

9. Système selon la revendication 8, **caractérisé en ce que** la matrice poreuse du ou des échangeurs (2) est(sont) disposées à l'intérieur d'un tube (14) autour du conduit d'échappement en amont du catalyseur SCR (5) et/ou en amont dudit ou desdits éléments dépollution additionnels (10).

10. Système selon la revendication 8 ou 9, **caractérisé en ce que** la matrice poreuse du ou des échangeurs (2) est(sont) disposées autour du catalyseur SCR 5 et/ou autour dudit ou desdits éléments de dépollution additionnels (10).

11. Système selon l'une quelconque des revendications précédentes, **caractérisé en ce qu'**il comporte en outre un conduit de recirculation des gaz d'échappement (15), un tube (16) monté autour du conduit EGR (15), la différence de diamètre entre le tube (14) et le conduit EGR (15) créant un volume à l'intérieur duquel la matrice poreuse de l'échangeur (2) est agencé de manière à pouvoir refroidir les gaz EGR en convoyant l'agent réducteur de l'enceinte de stockage (1) à l'échangeur (2) lorsque la température des gaz circulant dans lendit conduit EGR (15) dépasse un seuil critique.

12. Véhicule à moteur comportant le système selon l'une quelconque des revendications précédentes, **caractérisé en ce que** le véhicule comporte un turbocompresseur dont la turbine est agencée en aval de l'échangeur (2).

13. Procédé de mise en oeuvre du système selon l'une quelconque des revendications 1 à 1 comportant les étapes suivantes:
- ouverture de la vanne ou de l'injecteur (11) lors du démarrage du véhicule à moteur afin que l'agent réducteur contenu dans l'enceinte de stockage (1) soit convoyé sous forme gazeuse dans l'échangeur (2) sous l'effet de la différence de pression existant à intérieur respectivement de t'enceinte de stockage (1) et l'échangeur (2);
- fermeture de la vanne ou de l'injecteur (11) lorsque la température des gaz ont atteint une valeur prédéterminée;
- purge progressive de l'échangeur (2) au cours de la période à température de fonctionnement du véhicule à moteur, en évacuant l'agent réducteur au travers de la soupape (12) pour qu'il soit introduit à nouveau dans l'enceinte de stockage (1).

14. Procédé selon la revendication 13, dans lequel l'échangeur (2) est complètement purgé et ne contient pas d'agent dépolluant au moment du démarrage du véhicule à moteur.

15. Procédé selon la revendication 13 ou 14, dans lequel l'ouverture de la vanne ou de l'injecteur (11) est piloté(e) par un calculateur (7) en fonction de la valeur d'un ou plusieurs paramètres choisi(s) parmi la concentration de NOx émis, la température du lubrifiant du moteur, la température du liquide de refroidissement du moteur, la température à l'échappement dans la veine gazeuse ou à l'intérieur des canaux de catalyseurs ou de filtres, de la vitesse du véhicule et du régime moteur.

16. Procédé de mise en oeuvre du système selon la revendication 8, 9 ou 10 dans lequel la vanne ou l'injecteur (11) est ouvert lors du démarrage du véhicule à moteur pour que l'agent dépolluant contenu dans l'enceinte de stockage (1) soit convoyé sous forme gazeuse dans l'échangeur (2) agencé en amont du catalyseur d'oxydation (10) afin de favoriser la production de NO2 par ce dernier de manière à améliorer la mise en action du catalyseur SCR(5).

17. Procédé de mise en oeuvre du système du véhicule à moteur selon la revendication 12, dans lequel la vanne ou l'injecteur (11) est ouvert lors du démarrage du véhicule à moteur pour que l'agent dépolluant contenu dans l'enceinte de stockage (1) soit convoyé sous forme gazeuse dans l'échangeur (2) afin d'accélérer la mise en action de la turbine, et dans lequel la vanne ou l'injecteur (11) est fermé lorsque la température en amont de la turbine dépasse la plage de température de fonctionnement normal la turbine.

## Patentansprüche

1. System zur Verringerung der Stickoxidmenge (NOₓ) in den Abgasen eines Motorfahrzeugs, wobei das System enthält:
- einen Speicherraum (1), der ein Reduktionsmittel enthält,
- einen SCR-Katalysator (5) zum Behandeln der reduktionsmittelhaltigen Abgase, und
- ein Einspritzmodul (6c), das dazu vorgesehen ist, das aus dem Speicherraum (1) stammende Reduktionsmittel in die Abgase des Motorfahrzeugs stromaufwärts des SCR-Katalysators (5) einzuspritzen,
**dadurch gekennzeichnet, dass**
das System ferner enthält:
- zumindest einen Wärmetauscher (2), der mit dem Speicherraum (1) verbunden ist und eine poröse Matrix enthält, die dazu bestimmt ist, das aus dem Speicherraum (1) stammende Reduktionsmittel zu absorbieren,
- einen Schieber bzw. Injektor (11) stromabwärts des Speicherraums (1) und stromaufwärts des Wärmetauschers (2), der dazu vorgesehen ist, die Reduktionsmittelzufuhr innerhalb des Wärmetauschers (2) zu kontrollieren, und
- ein Ventil (12), das zwischen Speicherraum (1) und Wärmetauscher (2) angeordnet ist;
und dass
- der Wärmetauscher (2) dazu vorgesehen ist, Wärmeenergie auf die Abgase des Motorfahrzeugs stromaufwärts des SCR-Katalysators (5) im Laufe einer sogenannten ersten Startphase zu übertragen, die dem Starten des Fahrzeugs folgt,
- der Schieber bzw. Injektor (11) dazu vorgesehen ist, die Reduktionsmitteldurchsatzmenge innerhalb des Wärmetauschers (2) während der Startphase zu kontrollieren, damit durch die Absorption von Reduktionsmittel durch die poröse Matrix des Wärmetauschers (2) die Temperatur des letztgenannten erhöht wird,
- der Schieber bzw. Injektor (11) dazu vorgesehen ist, um anschließend im Laufe einer sogenannten Betriebstemperaturphase bei dem Betrieb des Motorfahrzeugs geschlossen zu werden, sobald die Abgase eine bestimmte Temperatur erreicht haben, und
- das Ventil (12) dazu vorgesehen ist, einerseits den Druck innerhalb des Wärmetauschers (2) während der Betriebstemperaturphase einzustellen und andererseits das in dem Wärmetauscher (2) enthaltende Reduktionsmittel dann in den Speicherraum (1) zu leiten, wenn der Druck innerhalb des Wärmetauschers (2) höher ist als der Druck innerhalb des Speicherraums (1).

2. System nach Anspruch 1, **dadurch gekennzeichnet, dass** der Schieber bzw. Injektor (11) dazu vorgesehen ist, ab Beginn der Betriebstemperaturphase des Motorfahrzeugs bis zum Beginn der nächsten Startphase geschlossen zu sein.

3. System nach Anspruch 1 oder 2, **dadurch gekennzeichnet, dass** es ferner ein Heizelement (3) aufweist, das dazu vorgesehen ist, den Speicherraum (1) in Abhängigkeit von dem Wert eines oder mehrerer Parameter zu erwärmen, der bzw. die ausgewählt ist/sind aus der Konzentration an ausgestoßenem NOx, der Temperatur des Motorschmierstoffs, der Temperatur der Motorkühlflüssigkeit, der Fahrzeuggeschwindigkeit, der Motordrehzahl und der Motorlast.

4. System nach Anspruch 1, 2 oder 3, **dadurch gekennzeichnet, dass** das Reduktionsmittel Ammoniak ist.

5. System nach Anspruch 4, **dadurch gekennzeichnet, dass** der Speicherraum (1) Ammoniak unter Druck enthält und dass die poröse Matrix des Wärmetauschers (2) ein Salz ist, ausgewählt aus Metallchloriden, wie etwa Bariumchlorid, Strontiumchlorid, Magnesiumchlorid, Kalziumchlorid und Nickelchlorid.

6. System nach Anspruch 4, **dadurch gekennzeichnet, dass** der Speicherraum (1) und der Wärmetauscher (2) ein erstes bzw. zweites Salz enthalten, wobei die Salze Metallchloride sind, die so ausgewählt sind, dass die Ammoniak-Desorptionsenthalpie des ersten Salzes geringer ist als die Ammoniak-Desorptionsenthalpie des zweiten Salzes.

7. System nach einem der vorangehenden Ansprüche, **dadurch gekennzeichnet, dass** der Wärmetauscher (2) in den Abgasen stromabwärts eines Einspritzmoduls (6c) zum Einspritzen von Reduktionsmittel und stromaufwärts des SCR-Katalysators (5) angeordnet ist.

8. System nach einem der Ansprüche 1 bis 6, **dadurch gekennzeichnet, dass** es ferner ein oder mehrere zusätzliche Reinigungselemente (10) aufweist, das bzw. die ausgewählt ist/sind aus einem Oxidationskatalysator, einem Dreiwegekatalysator und einem Partikelfilter, wobei das bzw. die Reinigungselemente (10) stromaufwärts des Einspritzmoduls (6c) zum Einspritzen von Reduktionsmittel angeordnet ist/sind, während der SCR-Katalysator (5) stromabwärts des genannten Einspritzmoduls (6c) angeordnet ist, und dass der Wärmetauscher (2) stromaufwärts des bzw. der zusätzlichen Reinigungselemente (10) angeordnet ist.

9. System nach Anspruch 8, **dadurch gekennzeichnet, dass** die poröse Matrix des bzw. der Wärmetauscher(s) (2) innerhalb eines Rohres (14) um die Austrittsleitung herum stromaufwärts des SCR-Katalysators (5) und/oder stromaufwärts des bzw. der zusätzlichen Reinigungselemente (10) angeordnet ist/sind.

10. System nach Anspruch 8 oder 9, **dadurch gekennzeichnet, dass** die poröse Matrix des bzw. der Wärmetauscher(s) (2) um den SCR-Katalysator (5) und/oder um das bzw. die zusätzlichen Reinigungselemente (10) herum angeordnet ist/sind.

11. System nach einem der vorangehenden Ansprüche, **dadurch gekennzeichnet, dass** es ferner eine Abgasrückführungsleitung (15), ein um die EGR-Leitung (15) herum montiertes Rohr (16) aufweist, wobei die Differenz im Durchmesser zwischen Rohr (14) und EGR-Leitung (15) ein einen Raum schafft, in welchem die poröse Matrix des Wärmetauschers (2) so angeordnet ist, dass sie die EGR-Abgase abkühlen kann, indem Reduktionsmittel von dem Speicherraum (1) zum Wärmetauscher (2) geleitet wird, wenn die Temperatur von den in der EGR-Leitung (15) strömenden Abgasen einen kritischen Schwellwert übersteigt.

12. Motorfahrzeug mit dem System nach einem der vorangehenden Ansprüche, **dadurch gekennzeichnet, dass** das Fahrzeug einen Turboverdichter aufweist, dessen Turbine stromabwärts des Wärmetauschers (2) angeordnet ist.

13. Verfahren zum Bereitstellen des Systems nach einem der Ansprüche 1 bis 11, das die nachfolgenden Schritte umfasst:
- Öffnen des Schiebers bzw. Injektors (11) beim Start des Motorfahrzeugs, damit das im Speicherraum (1) enthaltene Reduktionsmittel in gasförmigem Zustand in den Wärmetauscher (2) unter der Wirkung der Druckdifferenz geleitet wird, die innerhalb des Speicherraums (1) bzw. Wärmetauschers (2) herrscht;
- Schließen des Schiebers bzw. Injektors (11), wenn die Abgastemperatur einen vorbestimmten Wert erreicht hat;
- allmähliches Ablassen des Wärmetauschers (2) im Laufe der Betriebstemperaturphase des Motorfahrzeugs, indem das Reduktionsmittel durch das Ventil (12) abgeführt wird, um es wieder in den Speicherraum (1) einzuleiten.

14. Verfahren nach Anspruch 13, wobei der Wärmetauscher (2) vollständig abgelassen wird und zum Zeitpunkt des Starts des Motorfahrzeugs kein Reinigungsmittel enthält.

15. Verfahren nach Anspruch 13 oder 14, wobei das Öffnen des Schiebers bzw. Injektors (11) über einen Rechner (7) in Abhängigkeit von dem Wert eines oder mehrerer Parameter gesteuert wird, der bzw. die ausgewählt ist/sind aus der Konzentration an ausgestoßenem NOx, der Temperatur des Motorschmierstoffs, der Temperatur der Motorkühlflüssigkeit, der Abgastemperatur im Abgasstrom bzw. innerhalb der Kanäle von Katalysator bzw. Filter, der Fahrzeuggeschwindigkeit und der Motordrehzahl.

16. Verfahren zum Bereitstellen des Systems nach Anspruch 8, 9 oder 10, wobei der Schieber bzw. Injektor (11) beim Start des Motorfahrzeugs geöffnet wird, damit das im Speicherraum (1) enthaltene Reinigungsmittel in gasförmigem Zustand in den Wärmetauscher (2) stromaufwärts des Oxidationskatalysators (10) geleitet wird, um die Erzeugung von N0₂ durch diesen letztgenannten so zu begünstigen, dass der Einsatz des SCR-Katalysators (5) verbessert wird.

17. Verfahren zum Bereitstellen des Systems des Motorfahrzeugs nach Anspruch 12, wobei der Schieber bzw. Injektor (11) beim Start des Motorfahrzeugs geöffnet wird, damit das im Speicherraum (1) enthaltene Reinigungsmittel in gasförmigem Zustand in den Wärmetauscher (2) geleitet wird, um den Einsatz der Turbine zu beschleunigen, und wobei der Schieber bzw. Injektor (11) geschlossen wird, wenn die Temperatur stromaufwärts der Turbine den normalen Betriebstemperaturbereich der Turbine übersteigt.

## Claims

1. System intended to reduce the quantity of NOx in the exhaust gases of a motor vehicle, the system comprising:
- a storage chamber (1) containing a reducing agent;
- an SCR catalyst (5) for treating the exhaust gases loaded with reducing agent, and
- an injection module (6c) arranged to inject the reducing agent coming from the storage chamber (1) into the exhaust gases of the motor vehicle, upstream of the SCR catalyst (5),
**characterised in that**
said system also comprises:
- at least one heat exchanger (2) connected to the storage chamber (1) and containing a porous matrix intended to absorb the reducing agent coming from the storage chamber (1);
- a shutter or injector (11) downstream of the storage chamber (1) and upstream of the exchanger (2) and arranged to control the addition of reducing agent in the exchanger (2), and
- a valve (12) placed between the storage chamber (1) and the exchanger (2);
and **in that**
- the exchanger (2) is arranged to transfer thermal energy to the exhaust gases of the motor vehicle upstream of the SCR catalyst (5) during a first so-called starting period following the starting of said vehicle;
- the shutter or injector (11) is arranged to control the flow rate of reducing agent in the exchanger (2) during said starting period so that the absorption of the reducing agent by the porous matrix of the exchanger (2) raises the temperature of the latter;
- the shutter or injector (11) is arranged then to be closed during a so-called operating-temperature period during the functioning of the motor vehicle as soon as the exhaust gases have reached a certain temperature; and
- the valve (12) is arranged so as firstly to regulate the pressure in the exchanger (2) during said operating-temperature period and secondly to convey the reducing agent contained in the exchanger (2) into the storage chamber (1) when the pressure in the exchanger (2) is greater than the pressure in the storage chamber (1).

2. System according to claim 1, **characterised in that** the shutter or injector (11) is arranged to be closed right from the start of the operating-temperature period of the motor vehicle until the beginning of the next starting period.

3. System according to claim 1 or 2, **characterised in that** it also comprises a heating body (3) arranged to heat the storage chamber (1) according to the value of one or more parameters chosen from the concentration of emitted NOx, the temperature of the engine lubricant, the temperature of the engine cooling liquid, the speed of the vehicle, the engine speed and the engine load.

4. System according to claim 1, 2 or 3, **characterised in that** the reducing agent is ammonia.

5. System according to claim 4, **characterised in that** the storage chamber (1) contains pressurised ammonia and **in that** the porous matrix of the exchanger (2) is a salt chosen from metal chlorides such as barium chloride, strontium chloride, magnesium chloride, calcium chloride and nickel chloride.

6. System according to claim 4, **characterised in that** the storage chamber (1) and the exchanger (2) contain respectively first and second salts, the salts being metal chlorides chosen so that the ammonia desorption enthalpy of the first salt is less than the ammonia desorption enthalpy of the second salt.

7. System according to any one of the preceding claims, **characterised in that** the exchanger (2) is arranged in the exhaust gases downstream of a module (6c) for injecting the reducing agent and upstream of the SCR catalyst (5).

8. System according to any one of claims 1 to 6, **characterised in that** it also comprises one or more additional cleanup elements (10) chosen from an oxidation catalyst, a three-way catalyst and a particulate filter, the cleanup element or elements (10) being arranged upstream from the module (6c) for injecting the reducing agent whereas the SCR catalyst (5) is arranged downstream of said injection module (6c), and **in that** the exchanger (2) is arranged upstream of said additional cleanup element or elements (10).

9. System according to claim 8, **characterised in that** the porous matrix of the exchanger or exchangers (2) is or are disposed inside a tube (14) around the exhaust pipe upstream of the SCR catalyst (5) and/or upstream of said additional cleanup element or elements (10).

10. System according to claim 8 or 9, **characterised in that** the porous matrix of the exchanger or exchangers (2) is or are disposed around the SCR catalyst 5 and/or around said additional cleanup element or elements (10).

11. System according to any one of the preceding claims, **characterised in that** it also comprises a pipe for recirculating the exhaust gases (15), a tube (16) mounted around the EGR pipe (15), the difference in diameter between the tube (14) and the EGR pipe (15) creating a volume inside which the porous matrix of the exchanger (2) is arranged so as to be able to cool the EGR gases by conveying the reducing agent from the storage chamber (1) to the exchanger (2) when the temperature of the gases circulating in said EGR pipe (15) exceeds a critical threshold.

12. Motor vehicle comprising the system according to any one of the preceding claims, **characterised in that** the vehicle comprises a turbocompressor the turbine of which is arranged downstream of the exchanger (2).

13. Method of implementation of the system according to any one of claims 1 to 11, comprising the following steps:
- opening the shutter or injector (11) when the motor vehicle is started so that the reducing agent contained in the storage chamber (1) is conveyed in gaseous form into the exchanger (2) under the effect of the pressure difference existing in respectively the storage chamber (1) and the exchanger (2);
- closing the shutter or injector (11) when the temperature of the gases has reached a predetermined value;
- progressively draining the exchanger (2) during the operating-temperature period of the motor vehicle, by discharging the reducing agent through the valve (12) so that it is once again introduced into the storage chamber (1).

14. Method according to claim 13, in which the exchanger (2) is completely drained and does not contain any reducing agent at the time of starting of the motor vehicle.

15. Method according to claim 13 or 14, in which the opening the shutter or injector (11) is controlled by a computer (7) according to the value of one or more parameters chosen from the concentration of emitted NOx, the temperature of the engine lubricant, the temperature of the engine cooling liquid, the exhaust temperature in the gas stream or inside the catalyst channels or filters, the speed of the vehicle and the engine speed.

16. Method for using the system according to claim 8, 9 or 10, in which the shutter or injector (11) is open when the motor vehicle is started so that the reducing agent contained in the storage chamber (1) is conveyed in gaseous form into the exchanger (2) arranged upstream of the oxidation catalyst (10) in order to promote the production of NO₂ by the latter so as to improve the activation of the SCR catalyst (5).

17. Method of implementation of the system according to claim 12, in which the shutter or injector (11) is open when the motor vehicle is started so that the reducing agent contained in the storage chamber (1) is conveyed in gaseous form into the exchanger (2) in order to accelerate the actuation of the turbine, and in which the shutter or injector (11) is closed when the temperature upstream of the turbine exceeds the normal operating temperature range of the turbine.
